Europäisches Patentamt

European Patent Office

Office européen des brevets

(19)

(11) Numéro de publication: **0 111 643**
**B1**

(12) # FASCICULE DE BREVET EUROPEEN

(45) Date de publication du fascicule du brevet: **20.05.87**

(51) Int. Cl.⁴: **H 01 M 2/24**

(21) Numéro de dépôt: **83109310.9**

(22) Date de dépôt: **20.09.83**

(54) Connexion électrique étanche à travers une paroi d'une batterie alcaline.

(30) Priorité: **23.09.82 FR 8216017**

(43) Date de publication de la demande:
**27.06.84 Bulletin 84/26**

(45) Mention de la délivrance du brevet:
**20.05.87 Bulletin 87/21**

(84) Etats contractants désignés:
**AT BE CH DE FR GB IT LI LU NL SE**

(56) Documents cités:
**FR-A- 770 701**
**FR-A-1 495 258**
**FR-A-2 026 871**

**PATENT ABSTRACTS OF JAPAN, vol. 5, no. 192
(E-85) (864), 8 décembre 1981**

(73) Titulaire: **Société Anonyme dite SAFT
156, avenue de Metz
F-93230 Romainville (FR)**

(72) Inventeur: **De Bellis, Laurent
65, rue Gabriel Péri
F-33110 Le Bouscat (FR)**
Inventeur: **Prokopp, Raymond
Résidence du Lac Bâtiment JC1 entrée 40 D
F-33300 Bordeaux (FR)**

(74) Mandataire: **Weinmiller, Jürgen et al
Lennéstrasse 9 Postfach 24
D-8133 Feldafing (DE)**

Courier Press, Leamington Spa, England.

EP 0 111 643 B1

## Description

La présente invention concerne une batterie alcaline selon le préambule de la revendication 1.

Dans la conception actuelle des automobiles électriques on utilise, pour la fabrication des batteries d'accumulateurs, le couple Nickel-Fer, et celui-ci nécessite la création de batteries monobloc alcalines de 6 V. Cette tension est obtenue par la réunion de cinq accumulateurs de tension égale à 1,2 V. Il est donc nécessaire de réaliser quatre connexions électriques entre ces accumulateurs, d'une manière étanche, sous le niveau d'électrolyte, pour diminuer la hauteur globale de cette batterie monobloc.

On connaît, par exemple à partir du document FR—A—770 701, des traversées de paroi utilisées dans les accumulateurs au plomb. Celles-ci sont réalisées par soudure de deux collecteurs au travers d'un orifice d'une paroi. L'opération de soudure crée une élévation modérée de température, qui est acceptable lorsque les pièces métalliques de la traversée sont en plomb.

Par le document FR—A—1 495 258 on connaît une connexion étanche pour une batterie d'accumulateurs ne nécessitant pas une soudure. Els pièces métalliques de la connexion sont en effet en plomb et peuvent être soudées ou réunies à froid selon la technique de rivetage.

Dans les accumulateurs alcalins il faut impérativement utiliser des métaux plus durs (acier nickelé par exemple), qui ne peuvent pas être rivetés sans risque de détérioration des parois plastiques, ou dont la soudure par des procédés conventionnels crée une élévation de température qui brûle la paroi.

L'invention a donc pour but de proposer une batterie d'accumulateurs alcalins, dont les connexions entre accumulateurs peuvent être d'un métal dur, ce qui exclut la réunion par soudure ou rivetage.

Ce but est atteint selon l'invention par la batterie telle qu'elle est caractérisée dans la revendication 1. En ce qui concerne des mises en oeuvre préférées de l'invention, référence est faite aux sous-revendications.

Il est décrit ci-après, à titre d'exemples et en référence aux figures du dessin annexé, deux exemples de mise en oeuvre de l'invention.

La figure 1 représente, en vue partiellement arrachée, une batterie monoblock à cinq accumulateurs selon l'invention.

La figure 2 représente la batterie selon la figure 1, en vue de dessus partiellement arrachée.

La figure 3A représente en vue éclatée une connexion étanche d'une batterie selon la figure 1 munie d'un joint passe-fil.

La figure 3B représente la connexion de la figure 3A, après montage sur une paroi commune à deux accumulateurs.

La figure 4A représente, en vue éclatée, une variante par rapport à la figure 3A, selon laquelle la connexion est munie de deux joints toriques.

La figure 4B représente la traversée de la figure 4A, après montage sur une paroi commune à deux accumulateurs.

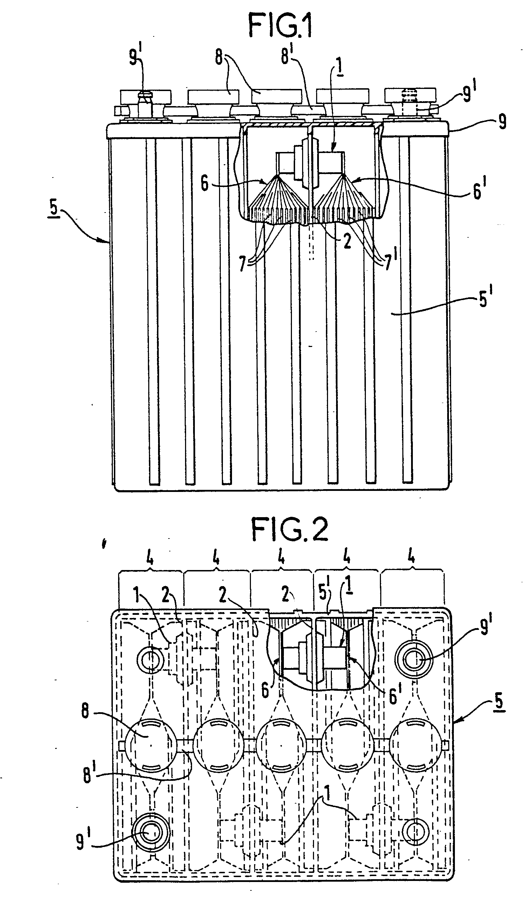

Selon les figures 1 et 2, une batterie 5 est constitué d'un bac monobloc 5' en matière plastique et elle comporte cinq accumulateurs 4 séparés chacun par une paroi 2 en matière plastique. Les quatre parois internes 2 comportent chacune un dispositif 1 de traversée de paroi, sous le niveau d'électrolyte. Cet emplacment des connexions rend obligatoire l'étanchéité des connexions mais limite l'encombrement en hauteur de la batterie.

De chaque côté de chaque connexion, c'est-à-dire dans chaque élément 4, des têtes de plaques 6, 6' relient la connexion aux électrodes 7 et 7'. Le soudage des têtes des plaques sur l'une des deux pièces de la connexion 1 est réalisé avant l'insertion dans l bac 5'. Ces ensembles sont ensuite introduits dans leur alvéole et on relie les deux pièces de la connexion par emmanchement à force.

Un couvercle 9, muni de cinq bouchons 8, recouvre le bac monobloc 5'.

Les cinq bouchons 8 sont reliés entre eux par une canalisation 8' qui permet un remplissage rapide de la batterie monobloc.

Dans la figure 2, on peut voir les cinq éléments 4, les quatre connexions 1, les quatre parois 2 et les deux bornes extérieures 9' de branchement de la batterie.

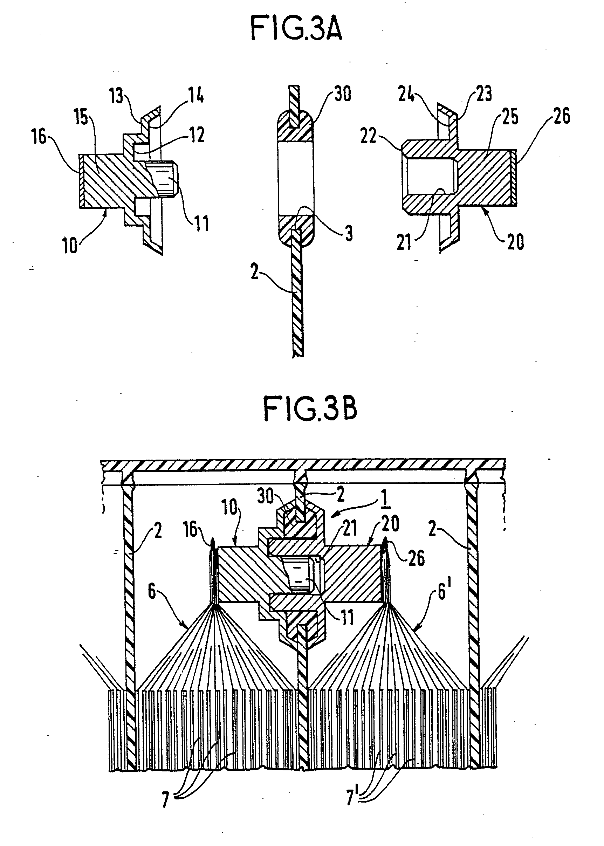

Dans la figure 3A, la connexion est représenté sous forme éclatée. Elle présente une pièce mâle 10, une pièce femelle 20 et un joint passe-fil 30.

La pièce mâle 10 est cylindrique et comprend un corps principal 15, puis à l'extrémité, côté paroi 2, un têton cylindrique 11, un épaulement 12, une partie saillante 13 en forme de cloche qui présente un autre épaulement 14 pour recevoir le joint passe-fil 30, et à l'autre extrémité, une face 16 où seront soudées les têtes de plaques.

La pièce femelle 20 comprend un corps principal 25, puis à l'extrémité côté paroi 2 un alésage 21 de forme complémentaire au téton 11, une partie saillante 23, équivalente à celle 13 de la pièce mâle 10, qui présente également un épaulement 24 pour recevoir le joint 30, et à l'autre extrémité une face 26 où seront soudées les têtes de plaques.

Le joint passe-fil 30 est introduit dans un alésage 3 de la paroi 2.

La figure 3B représente la connexion après montage.

Le têton 11 de la pièce mâle est introduit dans l'alésage 21 de la pièce femelle. L'extrémité 22 de celle-ci vient en butée sur l'épaulement 12 de la pièce mâle.

Le joint passe-fil 30 se loge entre l'épaulement 14 de la partie saillant 13 de la pièce mâle et l'épaulement 24 de la partie saillante de la pièce femelle.

Les têtes de plaques 6, reliant les électrodes 7 de même polarité entre elles, sont soudées à la face 16 de la pièce mâle. Les têtes de plaques 6', reliant les électrodes 7' de même polarité entre elles, sont soudées à la face 26 de la pièce femelle.

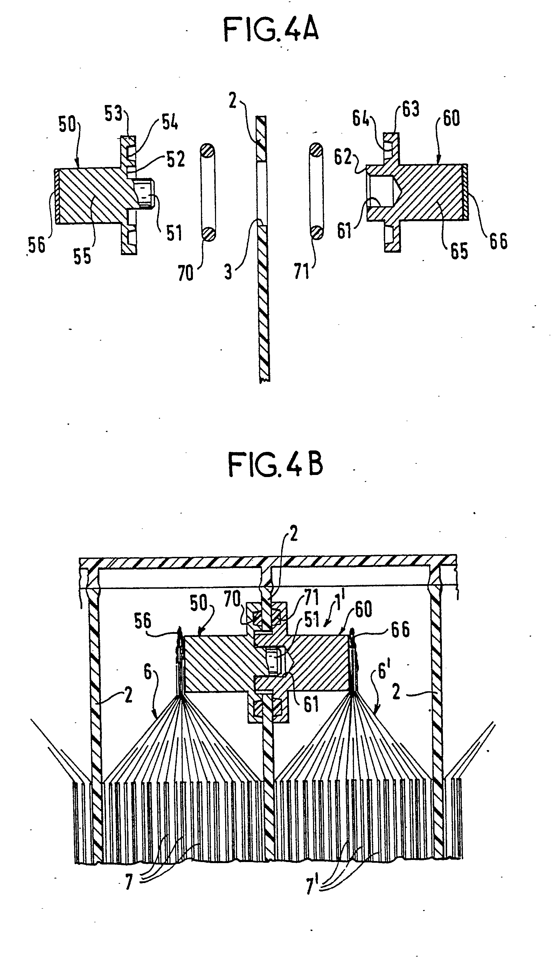

Dans la figure 4A, on a représenté une variante de la connexion précédente. Elle présente une pièce mâle 50, une pièce femelle 60 et deux joints toriques 70, 71.

La pièce mâle 50 comprend un corps principal 55, puis à l'extrémité, côté paroi 2 un têton 51, un épaulement 52, une partie saillante 53 qui présente une rainure cylindrique 54 pour recevoir le joint torique 70, et, à l'autre extrémité, un face 56 où, seront soudées les têtes de plaques.

La pièce femelle 60 comprend un corps principal 65, puis à l'extrémité côté paroi 2 un alésage 61, une partie saillante 63 qui présente une rainure cylindrique 64 pour recevoir le joint torique 71, et à l'autre extrémité, une face 66 où seront soudées les têtes de plaques.

La paroi 2 est munie d'un orifice 3.

La figure 4B représente cette connexion après montage. Le têton 51 de la pièce mâle est introduit dans l'alésage 61 de la pièce femelle.

L'extrémité 62 de celle-ci vient en butée sur l'épaulement 52 de la pièce mâle.

Le joint torique 70 se loge dans la rainure cylindrique de la partie saillante 53 de la pièce mâle 50 et vient en appui sur une face de la paroi 2, et le joint torique 71 se loge dans la rainure cylindrique de la partie saillante 63 de la pièce femelle 60 et vient en appui sur l'autre face de la paroi 2. Pendant le montage, les joints toriques sont coincés dans les rainures circulaires pour éviter tout risque de fluage.

Les têtes de plaques 6, reliant les électrodes 70 de même polarité entre elles, sont soudées à la face 56 de la pièce mâle. Les têtes de plaques 6', reliant les électrodes 7' de même polarité entre elles, sont soudées à la face 66 de la pièce femelle.

Dans les deux figures 3B et 4B, la fin du serrage est donc obtenue par butée mécanique de la pièce femelle sur un épaulement de la pièce mâle et en aucun cas les parties saillantes de ces deux pièces ne viennent pincer ou écraser la paroi plastique.

L'emmanchement est réalisé à l'aide d'une pince pneumatique ou hydraulique qui vient, par la partie supérieure d'une batterie, pincer les deux pièces et les presser l'une contre l'autre.

Sans sortir du cadre de l'invention, chaque connexion peut comporter d'autres types de joints, en nombre supérieur à deux, et elle peut être placée au-dessus du niveau d'électrolyte.

**Revendications**

1. Batterie alcaline (5) constituée d'un bac monobloc (5') en matière plastique comportant au moins deux accumulateurs (4) séparés par une paroi (2) en matière plastique présentant un orifice (3) au travers duquel passe une connexion électrique étanche constituée par une première pièce mâle métallique de jonction reliée aux têtes de plaques (6) de même polarité d'un accumulateur, et par une deuxième pièce femelle métallique de jonction relié aux têtes de plaques (6') de même polarité, mais opposée à la précédente, de l'accumulateur adjacent, ces deux pièces de jonction étant emmanchées à force caractérisée en ce que ladite première pièce de jonction (10, 50) et ladite deuxième pièce métallique de jonction (20, 60) viennent en butée l'une sur l'autre sans écraser la paroi plastique, et qu'elles comportent en outre chacune une partie cylindrique saillante évidée (13, 23) pour comprimer au moins un joint (30, 70, 71) situé au niveau de l'orifice (3), chaque partie saillante venant en léger appui sur une face de la paroi plastique (2).

2. Batterie alcaline selon la revendication 1, caractérisée en ce que la pièce mâle (10, 50) comporte un têton central (11, 51) qui pénètre dans un alésage (21, 61) de la pièce femelle (20, 60) et qui délimite un épaulement externe (12, 52) constituant ladite butée.

3. Baterie alcaline selon l'une des revendications 1 et 2, caractérisée en ce qu'elle possède un joint passe-fil comprimé (30) entre la pièce mâle (10) et la pièce femelle (20) au niveau du diamètre intérieur, et entre la paroi et la pièce mâle, puis entre la paroi et la pièce femelle à sa périphérie.

4. Batterie alcaline selon l'une des revendications 1 et 2, caractérisée en ce qu'elle possède deux joints toriques (70, 71) serrés l'un entre la paroi (2) et la pièce mâle (50), et l'autre entre la paroi (2) et la pièce femelle (60).

**Patentansprüche**

1. Alkalische Batterie (5) bestehend aus einem Monoblockbehälter (5') aus Kunststoffmaterial mit mindestens zwei Akkumulatoren (4), die durch eine Wand (2) aus Kunststoffmaterial gentrennt sind, wobei diese Wande eine öffnung (3) aufweist, durch die eine dichte elektrische Durchführung geleitet ist, die aus einem ersten metallischen Verbindungsteil vom Steckertyp, das mit den Plattenköpfen (6) gleicher Polarität eines Akkumulators verbunden ist, und einem zweiten metallischen Verbindungsteil vom Buchsentyp besteht, das im benachbarten Akkumulator mit den Plattenköpfen (6') gleicher Polarität, die aber der vorhergehenden entgegengesetzt ist, verbunden ist, wobei diese beiden Verbindungteile durch Krafteinwirkung ineinandergesteckt werden, dadurch gekennzeichent, daß das erste Verbindungsteil (10, 50) und das zweite metallische Verbindungsteil (20, 60) aneinander in Anschlag gelangen, ohne die Kunststoffwand einzudrücken, und daß sie weiter einen ausgehöhlten vorspringenden zylindrischen Bereich (13, 23) aufweisen, um mindestens eine Dichtung (30, 70, 71) zusammenzudrücken, die sich in der Höhe der öffnung (3) befindet, wobei jeder vorspringende Bereich leicht auf einer Seite der Kunststoffwand (2) aufliegt.

2. Alkalische Batterie nach Anspruch 1, dadurch gekennzeichnet, daß das Steckerteil (10, 50) einen zentralen Kopf (11, 51) aufweist, der in eine Bohrung (21, 61) des Buchsenteils (20, 60) eindringt und der eine den Anschlag bildende Außenschulter (12, 52) begrenzt.

3. Alkalische Batterie nach einem der Ansprüche 1 und 2, dadurch gekennzeichnet, daß sie eine ösenförmige Ring-Dichtung (30) aufweist, die zwischen dem Steckerteil (10) und dem Buchsenteil (20) in Höhe des inneren Durchmessers, und zwischen der Wand und dem Steckerteil und weiter zwischen der Wand und dem Buchsenteil an seinem Umfang komprimiert ist.

4. Alkalische Batterie nach einem der Ansprüche 1 und 2 dadurch gekennzeichnet, daß sie zwei Torusdichtungen (70, 71) aufweist, von denen eine zwischen der Wand (2) und dem Steckerteil (50) und die andere zwischen der Wand (2) und dem Buchsenteil (60) eingeklemmt ist.

**Claims**

1. An alcaline battery (5) constituted by a monobloc casing (5') of plastic material comprising at least two accumulators (4) separated by a wall (2) of plastic material, presenting an opening (3) through which passes a tight electrical connection constituted by a first metal male junction piece connected to the plate heads (6) of even polarity of an accumulator and by a second metal female junction piece connected to the plate heads (6') of even polarity, but opposite to the preceding polarity, of the adjacent accumulator, these two junction pieces being engaged into each other in a force fit, characterized in that said first junction piece (10, 50) and said second metal junction piece (20, 60) come into an abutting position one against the other without crushing the plastic wall, and in that they each further comprise a hollowed-out protruding cylindrical part (13, 23) for compressing at least one sealing member (30, 70, 71) situated at the level of the opening (3), each protruding part bearing slightly on a side of the plastic wall (2).

2. An alcaline battery according to claim 1, characterized in that the male piece (10, 50) comprises a central peg (11, 51) which penetrates into a boring (21, 61) of the female piece (20, 60) and which limits an outer shoulder (12, 52) constituting said stop.

3. An alcaline battery according to any one of claims 1 and 2, characterized in that it includes a feed-through seal (30) compressed between the male piece (10) and the female piece (20) at the level of the inner diameter, and between the wall and the male piece, then between the wall and the female piece at its periphery.

4. An alcaline battery according to one of claims 1 and 2, characterized in that it includes two torus seals (70, 71) compressed one between the wall (2) and the male piece (50) and the other between the wall (2) and the female piece (60).

# FIG.1

# FIG.2

# FIG.3A

# FIG.3B

# FIG.4A

# FIG.4 B